# FASCICULE DE BREVET EUROPEEN

(11) **EP 1 979 192 B1**
(45) Date de publication et mention de la délivrance du brevet: **29.07.2009**
(21) Numéro de dépôt: 07730885.6
(22) Date de dépôt: 30.01.2007
(51) Int. Cl.: B60R 9/055

(54) **DISPOSITIF DE FIXATION D'UN ACCESSOIRE SUR UN SUPPORT**
VERFAHREN ZUR BEFESTIGUNG EINES ZUBEHÖRTEILS AUF EINEM TRÄGER
DEVICE FOR FIXING AN ACCESSORY ON A MOUNT

(30) Priorité: 30.01.2006 FR 0600823; 31.01.2006 US 763364 P
(43) Date de publication de la demande: 15.10.2008
(73) Titulaire: Transformers, 01700 Miribel (FR)
(72) Inventeur: BERTUCAT, Thierry, F-69350 La Mulatiere (FR); SEYS, Jean-Marc, F-69270 Fontaines Saint Martin (FR)
(74) Mandataire: Schmitt, John
(86) Numéro de dépôt international: PCT/FR2007/000167
(87) Numéro de publication internationale: WO 2007/085748

(56) Documents cités:
- EP-A- 1 477 365
- WO-A-01/51747
- FR-A- 2 836 432

## Description

La présente invention est relative à un dispositif de fixation permettant le montage des accessoires pour véhicules, motos ou cyclomoteurs, et notamment des coffres destinés à être fixés, de façon amovible, sur le toit d'un véhicule.

Dans l'exemple des coffres de toit pour véhicule ces derniers sont en général constitués d'une demi-coque inférieure, formant le fond dudit coffre et fixée sur le toit d'un véhicule, et d'une demi-Coque supérieure formant le couvercle, rapportée sur ladite demi-coque inférieure par l'intermédiaire de moyens de pivotement.

Les moyens de pivotement sont principalement constitués par des charnières assurant le pivotement de la demi-coque supérieure par rapport à la demi-coque inférieure et par des vérins articulés et chargés élastiquement destinées à assurer le passage d'une position de fermeture à une position d'ouverture et inversement entre les demi-coques.

On note que la demi-coque inférieure du coffre est fixée sur le toit l'un véhicule à l'aide de dispositifs de fixation coopérant respectivement d'une part avec le fond de ladite demi-coque et d'autre part avec une traverse solidaires du toit du véhicule.

On connaît d'après le brevet français FR 2 836 432 (0202423), appartenant au demandeur, des dispositifs de fixation qui permettent en position dite "ouverte", de coulisser le long de l'ouverture ménagée dans l'accessoire, et en position dite "fermée", d'être immobilisé, sur ledit accessoire par un actionnement de l'organe de serrage; ce document FR 2 836 432 décrit le préambule de la revendication 1.

Le dispositif de fixation comporte des moyens d'actionnement assurant le pivotement de moyens de liaison de manière à obtenir un rapprochement ou un écartement latéral, correspondant respectivement à un serrage ou un desserrage, et ce simultanément au déplacement par translation desdits moyens de liaison.

L'objet du dispositif de fixation suivant la présente invention consiste à perfectionner ceux décrits dans le brevet FR 2 836 432 (0202423), appartenant au demandeur, en améliorant le guidage des moyens de liaison lors de leur passage entre une position dite « ouverte » à une position dite « fermée ».

Egalement l'objet du dispositif de fixation suivant la présente invention consiste à obtenir en position dite « ouverte » un écartement des moyens d'accrochage maximum et plus important que ceux connus à ce jour pour permettre le passage de barres transversales de dimension plus grande.

Le dispositif de fixation suivant la présente invention permettant le montage et la fixation d'un accessoire sur des barres transversales ou un châssis d'un véhicule à deux ou quatre roues, comporte un corps de montage associé à des moyens d'entraînement agissant sur des moyens d'accrochage de manière à déplacer lesdits moyens d'accrochage entre une position dite « ouverte » à une position dite « fermée », lesdits moyens d'accrochage sont constitués de deux éléments de liaison présentant à l'opposé de leur extrémité en forme de crochet une partie sensiblement droite solidaire respectivement d'axes de guidage de manière que les axes les plus éloignés des extrémités en forme de crochet coopèrent avec des premiers moyens de guidages ménagés dans la pièce d'entraînement des moyens d'entraînement, tandis que les autres axes sont logés dans des seconds moyens de guidage réalisés dans les bords parallèles du corps de montage de manière que les axes de guidage puissent, pendant leur déplacement entre une position dite « ouverte » à une position dite « fermée », d'une part se déplacer librement dans lesdits premiers et seconds moyens de guidage, et d'autre part être le plus proche possible de l'axe vertical XX' du dispositif de fixation tout en assurant un débattement amplifié des moyens d'accrochage pendant leur déplacement.

Le dispositif de fixation suivant la présente invention comporte un corps de montage associé à des moyens d'entraînement agissant sur des moyens d'accrochage de manière à déplacer lesdits moyens d'accrochage entre une position dite « ouverte » à une position dite « fermée », tandis que les moyens d'accrochage sont constitués de deux éléments de liaison présentant à l'opposé de leur extrémité en forme de crochet une partie sensiblement droite solidaire respectivement d'axes de guidage de manière que les axes les plus éloignés des extrémités en forme de crochet coopèrent avec des gorges de guidage ménagées dans la pièce d'entraînement des moyens d'entraînement, tandis que les autres axes sont logés dans des lumières oblongues réalisées dans des bords parallèles du corps de montage afin d'assurer en position dite « ouverte » une distance d entre les extrémités en forme de crochet des éléments de liaison permettant le passage de barres transversales ou d'un châssis de grandes dimensions.

Le dispositif de fixation suivant la présente invention comporte un corps de montage qui est réalisé, sous la forme d'une pièce parallélépipédique en forme de U renversé comportant une face horizontale supérieure solidaire d'une tige de montage assurant le guidage en translation vertical de la pièce d'entraînement des moyens d'entraînement, et des bords parallèles comprenant chacun deux lumières oblongues qui sont inclinées suivant des directions différentes afin que le sommet de chaque lumière oblongue se trouve au niveau de la partie inférieure de la tige de montage.

Le dispositif de fixation suivant la présente invention comprend une pièce d'entraînement qui comporte de part et d'autre d'un passage central des dégagements latéraux débouchant dans les gorges de guidage qui présentent un profil oblong et incliné.

Le dispositif de fixation suivant la présente invention comprend des éléments de liaison dont les extrémités en forme de crochet comporte une face plane présentant un débord latéral.

Le dispositif de fixation suivant la présente invention comprend un corps de montage dont les bords parallèles comporte une série de dents destinées à venir en appui contre le fond d'un accessoire.

Le dispositif de fixation suivant la présente invention comprend un corps de montage comportant au-dessus de chaque bord parallèle des passe-sangles constituant des points d'ancrage à des sangles.

Le dispositif de fixation suivant la présente invention comprend une pièce d'entraînement dont les gorges de guidage présentent une inclinaison qui est différente de celle prévue pour les lumières oblongues du corps de montage.

La description qui va suivre en regard des dessins annexés, donnés à titre d'exemple non limitatif, permettra de mieux comprendre l'invention, les caractéristiques qu'elle présente et les avantages qu'elle est susceptible de procurer :
Figure 1 est une vue en perspective illustrant le fond d'un coffre de toit pour véhicule fixé sur des barres transversales à l'aide des dispositifs de fixation suivant la présente l'invention.
Figure 2 est une vue éclatée en perspective montrant l'ensemble des éléments constitutifs du dispositif de fixation suivant la présente invention.
Figure 3 est une vue latérale en coupe représentant le dispositif de fixation suivant la présente invention en position ouverte.
Figure 4 est une vue latérale en coupe illustrant le dispositif de fixation de la figure 3 en position de serrage autour de la barre transversale correspondante.

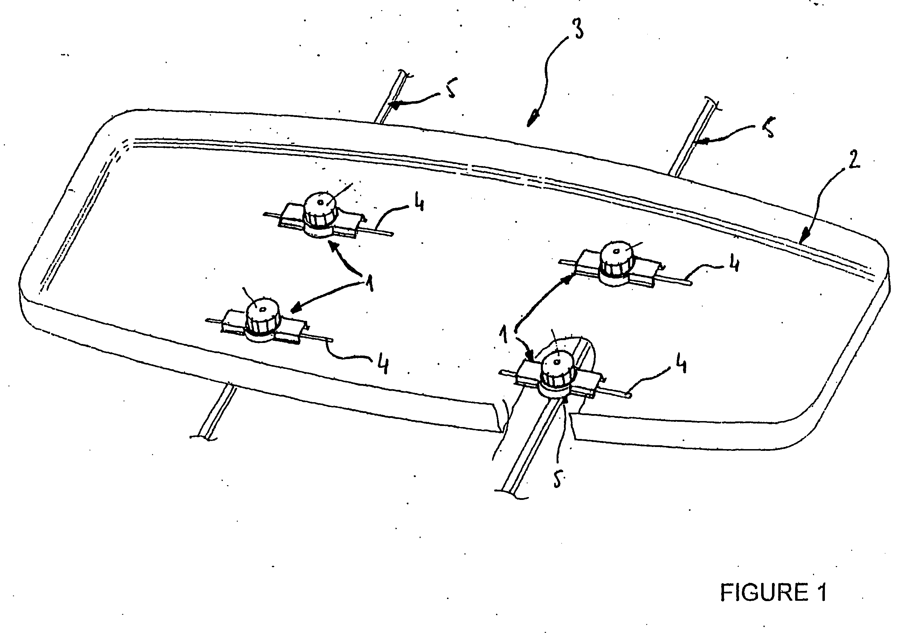

On a montré en figure 1 le fond 2 d'une demi-coque inférieure 3 d'un coffre de toit pour véhicule sur lequel sont positionnés et montés des dispositifs de fixation 1 suivant la présente invention.

Le fond 2 de la demi-coque inférieure 3 est pourvu de fentes 4 qui sont traversées chacune par un dispositif de fixation 1 afin que ce dernier puisse coopérer, après coulissement à l'intérieur de la fente 4, avec la barre transversale 5 correspondante solidaire du toit d'un véhicule.

Le réglage par coulissement des dispositifs de fixation 1 à l'intérieur de chaque fente 4 permet d'adapter le fond 2 de la demi-coque inférieure 3 du coffre de toit aux espacements variables séparant les barres transversales 5 solidaires du toit du véhicule.

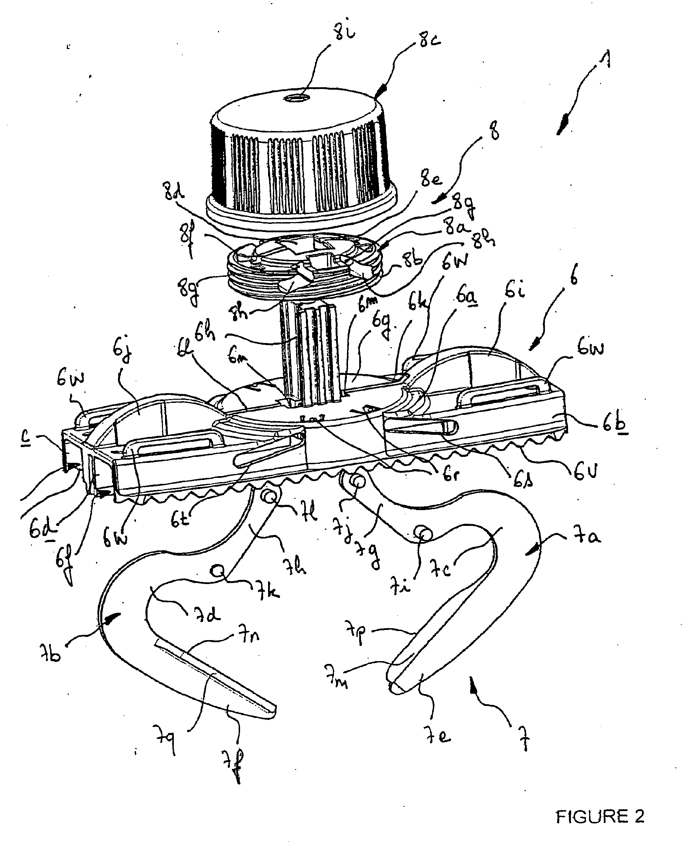

On a représenté en figure 2 un dispositif de fixation 1 suivant la présente invention comportant principalement un corps de montage 6, des moyens d'accrochage ou de liaison 7, et des moyens d'entraînement 8.

On note que l'ensemble des pièces constituant le dispositif de fixation 1 suivant la présente invention est obtenu par moulage ou par injection de matière plastique.

Le corps de montage 6 est réalisé, par exemple, sous la forme d'une pièce parallélépipédique en forme de U renversé comportant une face horizontale 6a à partir de laquelle s'étendent verticalement deux bords parallèles 6b, 6c séparés à chaque extrémité dudit corps par une cloison centrale creuse 6d permettant de délimiter des rainures longitudinales 6e, 6f.

La face horizontale 6a du corps de montage 6 comporte en son milieu une surface plane 6g en forme de disque solidaire en son centre et suivant une direction verticale d'une tige de montage 6h.

La face horizontale 6a du corps de montage 6 se prolonge de part et d'autre de la surface plane 6g et suivant une direction verticale par deux carters 6i, 6i présentant un profil en portion de cercle délimitant des logements internes 6p, 6g de même configuration débouchant respectivement dans la cloison centrale creuse 6d.

En effet, les carters 6i, 6i se prolongent en dessous de la face horizontale 6a et à chaque extrémité du corps de montage 6 par la portion de cloison centrale creuse 6d correspondante afin de délimiter des logements internes continus 6p, 6g pour la réception en position d'ouverture du dispositif de fixation 1 des moyens d'accrochage 7 (figure 2).

La surface plane 6g est percée de deux fentes longitudinales 6k, 6l débouchant respectivement d'une part à l'intérieur des logements 6p, 6g délimités par les carters 6i, 6i et d'autre part dans des passages 6m, 6n disposés à proximité de la tige de montage 6h.

La surface plane 6g comporte sur son pourtour circulaire interne des languettes élastiques 6r coopérant avec les moyens d'entraînement 8 pour le blocage en rotation en fin de course de déplacement de ces derniers.

Chaque bord parallèle 6b, 6c du corps de montage 6 comporte des moyens de guidage qui sont constitués de deux lumières oblongues 6s, 6t inclinées suivant des directions différentes afin que le sommet de chaque lumière oblongue se trouve au niveau de la partie inférieure de la tige de montage 6h.

Egalement, les bords parallèles 6b, 6c du corps de montage 6 se prolongent à l'opposé de la face horizontale 6a par une série de dents,6u, 6v destinées à venir en appui contre le fond 2 de la demi-coque inférieure 3 et plus particulièrement de part et d'autre de chaque fente 4.

Le corps de montage 6 comporte au-dessus de chaque bord parallèle 6b, 6c et de part et d'autre des carters 6i, 6i des passe-sangles 6w constituant des points d'ancrage à des sangles non représentées.

Les moyens d'accrochage 7 du dispositif de fixation 1 sont constitués de deux éléments de liaison 7a, 7b présentant chacun un profil courbe 7c, 7d coopérant en position ouverte avec les logements 6p, 6g du corps de montage 6 délimités par les carters 6i,6i et une extrémité libre en forme de crochet 7e, 7f.

Chaque élément de liaison 7a, 7b se prolonge au-dessus de son profil courbe 7c, 7d et à l'opposé de son extrémité en forme de crochet 7e, 7f, par une partie sensiblement droite 7g, 7h solidaire respectivement de deux axes de guidage 7i, 7i ; 7k, 7l traversant de part en part l'épaisseur desdits éléments de liaison.

Ainsi, la partie sensiblement droite 7g, 7h de chaque élément de liaison 7a, 7b comportes, porté par même axe géométrique d'une part à proximités du profil courbe 7c, 7d, un premier axe de guidage 7i, 7k, et d'autre part au niveau de l'extrémité libre desdites parties sensiblement droites 7g, 7h un second axe de guidage 7i, 7l.

Chaque extrémité en forme de crochet 7e, 7f des éléments de liaison 7a, 7b comporte une face plane 7m, 7n présentant un débord latéral 7p, 7g par rapport au plan contenant les éléments de liaison 7a, 7b.

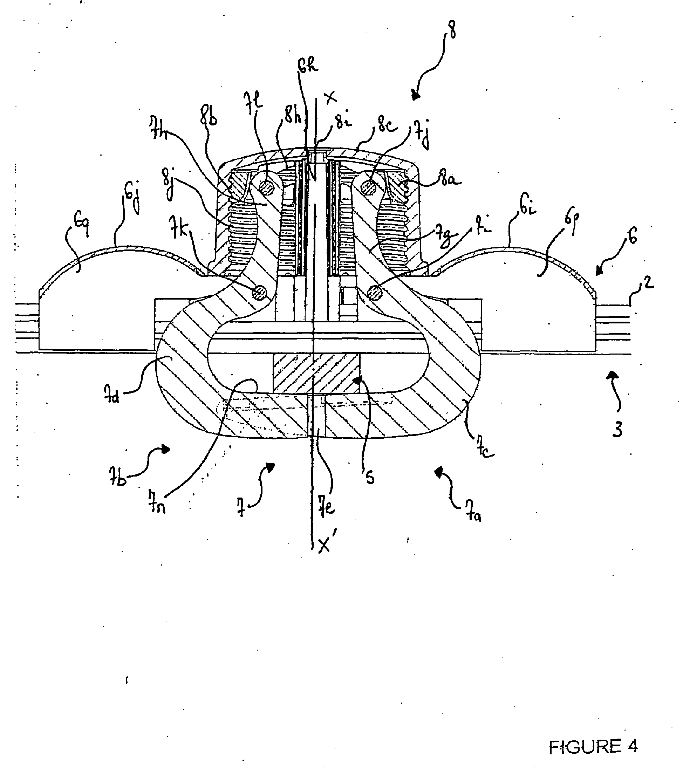

Le débord latéral 7p, 7g de chaque face plane 7m, 7n permet de constituer une zone d'appui plus large contre la barre transversale 5 correspondante, lorsque le dispositif de fixation 1 est en position fermée (figure 4).

Les moyens d'entraînement 8 du dispositif de fixation 1 sont constitués d'une pièce d'entraînement 8a sensiblement cylindrique pourvue d'un filetage extérieur 8b et d'un organe de serrage 8c.

La pièce d'entraînement 8a comporte un passage central 8d qui est traversé par la tige de montage 6h lorsque ladite pièce d'entraînement 8a est positionnée sur la face plane 6g du corps de montage 6.

La pièce d'entraînement 8a comporte sur toute son épaisseur des fentes 8e, 8f débouchant dans le passage central 8d et disposées au-dessus afin de communiquer respectivement avec les fentes longitudinales 6k, 6l de la face plane 6g lorsque ladite pièce d'entraînement 8a est positionnée sur le corps de montage 6.

La pièce d'entraînement 8a comporte de part et d'autre du passage central 8d des dégagements latéraux 8g débouchant dans des moyens de guidage qui sont constitués de gorges de guidage 8h disposées sur le pourtour externe de ladite pièce et plus particulièrement au niveau du filetage extérieur 8b en sectionnant ce dernier.

Les gorges de guidage 8h sont au nombre de quatre, disposées par paire, c'est à dire, réparties sur le pourtour de la pièce d'entraînement 8a de manière que deux gorges de guidage soient ménagées dans le même secteur périphérique.

Les gorges de guidage 8h présentent un profil oblong et incliné de manière que le sommet de chaque gorge de guidage 8h se trouve au niveau de la face supérieure de la pièce d'entraînement 8a.

Egalement, on note que les dégagements latéraux 8g sont ménagés dans la pièce d'entraînement 8a de manière à venir déboucher à l'intérieur et au niveau de chaque sommet du profil oblong des gorges de guidage 8h.

L'organe de serrage 8c est réalisé sous forme de bouchon taraudé monté libre en rotation autour de la pièce d'entraînement 8a du dispositif de fixation 1. L'organe de serrage 8c présente un taraudage interne 8j engagé sur le filetage externe 8b de la pièce d'entraînement 8a.

L'organe de serrage 8c comporte dans sa partie supérieure et centrale des moyens de blocage 8i coopérant avec ceux de la tige de montage 6h permettant de retenir l'organe de serrage en translation 8c tout en lui conférant la possibilité de tourner autour de son axe de symétrie.

L'organe de serrage 8c comporte dans sa partie interne et inférieure des crans 8k coopérant avec les languettes élastiques 6r du corps de montage 6 pour permettre le blocage en rotation dudit organe de serrage lorsque ce dernier arrive en fin de course.

Lors de l'assemblage du dispositif de fixation 1, on comprend aisément que les parties sensiblement droites 7g, 7h des éléments de liaison 7a, 7b traversent le corps de montage 6 par les passages 6m, 6n de manière que les axes 7i, 7l les plus éloignés des extrémités en forme de crochet 7e, 7f des éléments de liaison 7a, 7c coopèrent avec les gorges de guidage 8h correspondantes de la pièce d'entraînement 8a, tandis que les autres axes 7i, 7k sont logés dans les lumières oblongues 6s, 6u des bords 6b, 6c dudit corps de montage.

A cet effet les parties sensiblement droites 7g, 7h des éléments de liaison 7a, 7b coopèrent avec les fentes longitudinales 6k, 6l du corps de montage 6 et celles 8e, 8f de la pièce d'entraînement 8a afin d'assurer le guidage en translation et en rotation des moyens d'accrochage 7.

Ainsi, on obtient par rotation de l'organe de serrage 8c et par l'intermédiaire de l'engagement du filetage extérieur 8b dans le taraudage interne 8i de l'organe de serrage 8c un déplacement en translation de la pièce d'entraînement 8a, laquelle coulisse sur la tige de montage 6h et entraînant avec elle les éléments de liaison 7a, 7b.

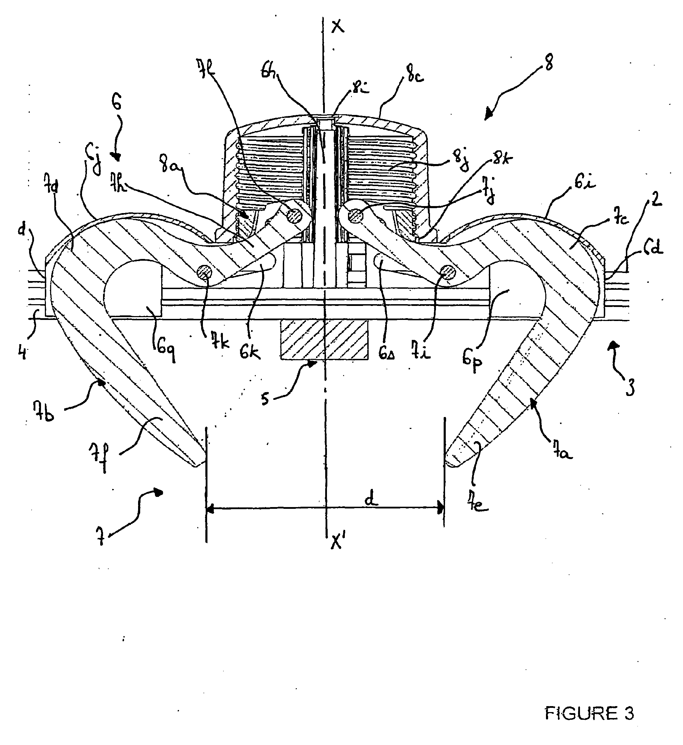

On a montré en figure 3 le dispositif de fixation 1 dans une première position dite « ouverte » en appui contre un accessoire constitué, par exemple, par le fond 2 d'une coque inférieure 3 d'un coffre destiné à être monté sur le toit d'un véhicule.

On note que chaque élément de liaison 7a, 7b des moyens d'accrochage 7 s'étend à travers une fente 4 ménagée dans le fond 2 de la coque inférieure 3.

Dans cette position dite « ouverte » la pièce d'entraînement 8a est en appui sur la surface plane 6g supérieure du corps de montage 6 et les éléments de liaison 7a, 7b sont placés dans une position écartée au maximum l'un de l'autre.

Cet écartement maximum des éléments de liaison 7a, 7b est obtenu également par la position et l'inclinaison des lumières oblongues 6s, 6t du corps de montage 6 et des gorges allongées de guidage 8h de la pièce d'entraînement 8a dans lesquels coulissent respectivement les axes de guidage 7i, 7k ; 7j, 7l desdits éléments de liaison.

En effet, les axes de guidage 7i, 7l se trouvent dans la partie supérieure, soit au sommet, des gorges de guidage 8h venant en appui contre la face supérieure de la pièce d'entraînement 8a qui est en contact avec la surface plane 6g supérieure du corps de montage 6.

Dans cette position la pièce d'entraînement 8a exerce une poussée sur les axes de guidage 7i, 7l obligeant les éléments de liaison 7a, 7b à s'écarter l'un de l'autre.

Lorsque les axes de guidage 7i, 7l se trouvent dans la partie supérieure des gorges de guidage 8h, les autres axes de guidage 7i, 7k se trouvent simultanément dans la partie inférieure des lumières oblongues 6s, 6t du corps de montage 6.

En position dite « ouverte » du dispositif de fixation 1, on remarque que chaque profil courbe 7c, 7d, des éléments de liaison 7a, 7b coopère avec le logement interne continu 6p, 6g délimité par les carters 6i, 6i et la cloison centrale creuse 6d du corps de montage 6.

En position dite « ouverte» du dispositif de fixation 1, on constate que la distance d prévue entre les extrémités en forme de crochet 7e, 7f des éléments de liaison 7a, 7b permet.le passage de barres transversales 5 de grande dimension.

Cette distance d est obtenue par la différence d'inclinaison entre les gorges de guidage 8h de la pièce d'entraînement 8a et les lumières oblongues 6s, 6t du corps de montage 6.

On a représenté en figure 4 le dispositif de fixation 1 dans une seconde position dite « fermée » permettant l'immobilisation du fond 2 d'une coque inférieure 3 sur les barres transversales 5 solidaires du toit d'un véhicule.

Lorsque l'utilisateur actionne l'organe de serrage 8c, c'est-à-dire, qu'il tourne ce dernier autour de son axe XX', la pièce d'entraînement 8a, bloquée en rotation, est déplacée en translation vers le haut par coulissement le long de la tige de montage 6h du corps de montage 6 pour venir en appui contre la face interne et supérieure de l'organe de serrage 8c.

Simultanément au déplacement en translation de la pièce d'entraînement 8a, les éléments de liaison 7a, 7b sont entraînés vers le haut de manière que chaque extrémité en forme de crochet 7e, 7f et plus particulièrement que chaque face plane 7m, 7n présentant un débord latéral 7p, 7g vienne en appui contre la face inférieure de la barre transversale 5 correspondante.

Le déplacement des éléments de liaison 7a, 7b par rapport au corps de montage 6 est constitué en combinaison d'une translation verticale non parallèle à l'axe XX' et d'un pivotement dont le centre se déplace en fonction des mouvements des axes de guidage 7i, 7l dans les gorges de guidage 8h du fait de la translation de la pièce d'entraînement 8a.

Egalement, le déplacement combiné des éléments de liaison 7a, 7b est assuré par la différence d'inclinaison prévue entre les gorges de guidage 8h et les lumières oblongues 6s, 6t du corps de montage 6 permettant la fermeture desdits éléments de liaison. A cet effet les gorges de guidage 8h de la pièce d'entraînement 8a présentent une inclinaison qui est différente de cette prévue pour les lumières oblongues 6s, 6t du corps de montage 6.

On note que les moyens d'accrochage 7 et plus particulièrement les axes de guidage 7i, 7j ; 7k, 71 des éléments de liaison 7a, 7b puissent, pendant leur déplacement entre une position dite « ouverte » à une position dite « fermée », d'une part se déplacer librement dans lesdits premiers et seconds moyens de guidage 8h ; 6s, 6t, et d'autre part être le plus proche possible de l'axe vertical XX' du dispositif de fixation tout en assurant un débattement amplifié des moyens d'accrochage pendant leur déplacement.

Ainsi les éléments de liaison 7a, 7b viennent enserrer latéralement et verticalement la barre transversale 5 correspondante.

On note que le dispositif de fixation 1 suivant la présente invention permet la retenue et l'immobilisation d'un accessoire comportant au moins une coque inférieure dont le fond est pourvu d'une fente pour le passage dudit dispositif de fixation afin que ce dernier coopère avec des barres ou un châssis d'un véhicule là deux.ou quatre roues.

II doit d'ailleurs être entendu que la description qui précède n'a été donnée qu'à titre d'exemple, et qu'elle ne limite nullement le domaine de l'invention dont on ne sortirait pas en remplaçant les détails d'exécution décrits par tout autre équivalent, l'étendue de l'invention n'étant limitée que par le libellé des revendications.

## Revendications

1. Dispositif de fixation permettant le montage et la fixation d'un accessoire sur des barres transversales (5) ou un châssis d'un véhicule à deux ou quatre roues, comportant un corps de montage (6) associé à des moyens d'entraînement (8) agissant sur des moyens d'accrochage (7) de manière à déplacer lesdits moyens d'accrochage (7) entre une position dite « ouverte » à une position dite « fermée », **caractérisé en ce que** les moyens d'accrochage (7) sont constitués de deux éléments de liaison (7a, 7b) présentant à l'opposé de leur extrémité en forme de crochet (7e, 7f) une partie sensiblement droite (7g, 7h) solidaire respectivement d'axes de guidage (7i, 7j ; 7k, 7l) de manière que les axes (7i, 7l) les plus éloignés des extrémités en forme de crochet (7e, 7f) coopèrent avec des premiers moyens de guidage (8h) ménagés dans la pièce d'entraînement (8a) des moyens d'entraînement (8), tandis que les autres axes (7i, 7k) sont logés dans des seconds moyens de guidage (6s, 6t) réalisés dans les bords parallèles (6b, 6c) du corps de montage (6) de manière que les axes de guidage (7i, 7i ; 7k, 7l) puissent, pendant leur déplacement entre une position dite « ouverte » à une position dite « fermée », d'une part se déplacer librement dans lesdits premiers et seconds moyens de guidage, et d'autre part être le plus proche possible de l'axe vertical XX' du dispositif de fixation tout en assurant un débattement amplifié des moyens d'accrochage pendant leur déplacement.

2. Dispositif de fixation suivant la revendication 1, **caractérisé en ce que** les moyens d'accrochage (7) sont constitués de deux éléments de liaison (7a, 7b) présentant à l'opposé de leur extrémité en forme de crochet (7e, 7f) une partie sensiblement droite (7g, 7h) solidaire respectivement d'axes de guidage (7i, 7i ; 7k, 7l) de manière que les axes (7i, 7l) les plus éloignés des extrémités en forme de crochet (7e, 7f) coopèrent avec des gorges de guidage (8h) ménagées dans la pièce d'entraînement (8a) des moyens d'entraînement (8), tandis que les autres axes (7i, 7k) sont logés dans des lumières oblongues (6s, 6t) réalisées dans des bords parallèles (6b, 6c) du corps de montage (6) afin d'assurer en position dite « ouverte » une distance d entre les extrémités en forme de crochet (7e, 7f) des éléments de liaison (7a, 7b) permettant le passage de barres transversales (5) ou d'un châssis de grandes dimensions.

3. Dispositif de fixation suivant la revendication 1, **caractérisé en ce que** le corps de montage (6) est réalisé, sous la forme d'une pièce parallélépipédique en forme de U renversé comportant une face horizontale supérieure (6a) solidaire d'une tige de montage (6h) assurant le guidage en translation verticale de la pièce d'entraînement (8a) des moyens d'entraînement (8), et des bords parallèles (6b, 6c) comprenant chacun deux lumières oblongues (6s, 6t qui sont inclinées suivant des directions différentes afin que le sommet de chaque lumière oblongue se trouve au niveau de la partie inférieure de la tige de montage (6h).

4. Dispositif de fixation suivant la revendication 1, **caractérisé en ce que** la pièce d'entraînement (8a) comporte de part et d'autre d'un passage central (8d) des dégagements latéraux (8g) débouchant dans les gorges de guidage 8h) qui présentent un profil oblong et incliné.

5. Dispositif de fixation suivant la revendication 1, **caractérisé en ce que** les extrémités en forme de crochet (7e, 7f) des éléments de liaison (7a, 7b) comportent une face plane (7m, 7n) présentant un débord latéral (7p, 7g).

6. Dispositif de fixation suivant la revendication 1, **caractérisé en ce que** les bords parallèles (6b, 6c) du corps de montage (6) comportent une série de dents (6u, 6v) destinées à venir en appui contre le fond d'un accessoire.

7. Dispositif de fixation suivant la revendication 1, **caractérisé en ce que** le corps de montage (6) comporte au-dessus de chaque bord parallèle (6b, 6c des passe-sangles (6w) constituant des points d'ancrage à des sangles.

8. Dispositif de fixation suivant la revendication 1, **caractérisé en ce que** les gorges de guidage (8h) de la pièce d'entraînement (8a) présentent une inclinaison qui est différente de celle prévue pour les lumières oblongues (6s, 6t) du corps de montage (6).

## Claims

1. Fixing device for mounting and fixing an accessory on crossbars (5) or a frame of a two-wheel or four-wheel vehicle, comprising a mounting body (6) associated with driving means (8) acting on hooking means (7) so as to move the hooking means (7) between an "open" position and a "closed" position, **characterized in that** the hooking means (7) consist of two connecting elements (7a, 7b) having, opposite their hook-shaped ends (7e, 7f), a substantially straight part (7g, 7h) secured respectively to guide pins (7i, 7j; 7k, 7l) such that the pins (7j, 7l) further away from the hook-shaped ends (7e, 7f) engage with first guide means (8h) made in the driving part (8a) of the driving means (8), while the other pins (7i, 7k) are housed in second guide means (6s, 6t) produced in the parallel edges (6b, 6c) of the mounting body (6) such that the guide pins (7i, 7j; 7k, 7l) are able, as they are moved between an "open" position and a "closed" position, firstly to move freely within said first and second guide means and secondly to be as close as possible to the vertical axis XX' of the fixing device while ensuring an increased clearance of the hooking means as they are moved.

2. Fixing device according to Claim 1, **characterized in that** the hooking means (7) consist of two connecting elements (7a, 7b) having, opposite their hook-shaped ends (7e, 7f), a substantially straight part (7g, 7h) secured respectively to guide pins (7i, 7j; 7k, 7l) such that the pins (7j, 7l) further away from the hook-shaped ends (7e, 7f) engage with guide grooves (8h) made in the driving part (8a) of the driving means (8), while the other pins (7i, 7k) are housed in oblong slots (6s, 6t) produced in parallel edges (6b, 6c) of the mounting body (6) in order to ensure a distance **d**, in the "open" position, between the hook-shaped ends (7e, 7f) of the connecting elements (7a, 7b) that enables crossbars (5) or a frame of large dimensions to pass through.

3. Fixing device according to Claim 1, **characterized in that** the mounting body (6) is produced in the form of an inverted U-shaped parallelepipedal part including an upper horizontal face (6a) secured to a mounting rod (6h) that guides the driving part (8a) of the driving means (8) translationally vertically, and parallel edges (6b, 6c) each comprising two oblong slots (6s, 6t) which are inclined in different directions such that the top of each oblong slot is located by the lower part of the mounting rod (6h).

4. Fixing device according to Claim 1, **characterized in that** the driving part (8a) includes, on either side of a central passage (8d), lateral depressions (8g) that open out into the guide grooves (8h) which have an oblong and inclined profile.

5. Fixing device according to Claim 1, **characterized in that** the hook-shaped ends (7e, 7f) of the connecting elements (7a, 7b) include a planar face (7m, 7n) having a lateral overhang (7p, 7q).

6. Fixing device according to Claim 1, **characterized in that** the parallel edges (6b, 6c) of the mounting body (6) include a series of teeth (6u, 6v) intended to bear against the base of an accessory.

7. Fixing device according to Claim 1, **characterized in that** the mounting body (6) includes, above each parallel edge (6b, 6c), strap loops (6w) constituting anchor points for straps.

8. Fixing device according to Claim 1, **characterized in that** the guide grooves (8h) of the driving part (8a) have an inclination different from that provided for the oblong slots (6s, 6t) of the mounting body (6).

## Patentansprüche

1. Befestigungsvorrichtung, die die Montage und die Befestigung eines Zubehörteils an Querträgern (5) oder an einem Fahrgestell eines zwei- oder vierrädrigen Fahrzeugs erlaubt, mit einem Montagekörper (6), der Antriebsmitteln (8) zugeordnet ist, die auf Befestigungsmittel (7) einwirken, um die Befestigungsmittel (7) zwischen einer so genannten "offenen" Stellung und einer so genannten "geschlossenen" Stellung zu verschieben, **dadurch gekennzeichnet, dass** die Befestigungsmittel (7) aus zwei Verbindungsmitteln (7a, 7b) bestehen, die entgegengesetzt zu ihrem hakenförmigen Ende (7e, 7f) einen im Wesentlichen geraden Bereich (7g, 7h) aufweisen, der mit Führungsachsen (7i, 7j; 7k, 7l) derart fest verbunden ist, dass die am weitesten von den hakenförmigen Enden (7e, 7f) entfernten Achsen (7j, 7l) mit ersten Führungsmitteln (8h) zusammenwirken, die im Antriebsbauteil (8a) der Antriebsmittel (8) eingerichtet sind, während die anderen Achsen (7i, 7k) in zweiten Führungsmitteln (6s, 6t) angeordnet sind, die in den parallelen Rändern (6b, 6c) des Montagekörpers (6) derart hergestellt sind, dass die Führungsachsen (7i, 7j; 7k, 71) während ihrer Verschiebung zwischen einer so genannten "offenen" Stellung und einer so genannten "geschlossenen" Stellung sich einerseits frei in den ersten und zweiten Führungsmitteln bewegen und andererseits so nahe wie möglich der senkrechten Achse XX' der Befestigungsvorrichtung sein können und gleichzeitig einen verstärkten Schwenkbereich der Befestigungsmittel während ihrer Verschiebung gewährleisten.

2. Befestigungsvorrichtung nach Anspruch 1, **dadurch gekennzeichnet, dass** die Befestigungsmittel (7) aus zwei Verbindungselementen (7a, 7b) bestehen, die entgegengesetzt zu ihrem hakenförmigen Ende (7e, 7f) einen im Wesentlichen geraden Bereich (7g, 7h) aufweisen, der mit Führungsachsen (7i, 7j; 7k, 7l) derart fest verbunden ist, dass die am weitesten von den hakenförmigen Enden (7e, 7f) entfernten Achsen (7j, 7l) mit Führungskehlen (8h) zusammenwirken, die im Antriebsbauteil (8a) der Antriebsmittel (8) eingerichtet sind, während die anderen Achsen (7i, 7k) in Langlöchern (6s, 6t) angeordnet sind, die in parallelen Rändern (6b, 6c) des Montagekörpers (6) hergestellt sind, um in der so genannten "offenen" Stellung einen Abstand d zwischen den hakenförmigen Enden (7e, 7f) der Verbindungselemente (7a, 7b) zu gewährleisten, der den Durchgang von Querträgern (5) oder eines Fahrgestells großer Abmessungen erlaubt.

3. Befestigungsvorrichtung nach Anspruch 1, **dadurch gekennzeichnet, dass** der Montagekörper (6) in Form eines parallelepipedischen Bauteils in Form eines umgekehrten U hergestellt ist, das eine obere waagrechte Seite (6a), die fest mit einer Montagestange (6h) verbunden ist, welche die senkrechte Translationsführung des Antriebsbauteils (8a) der Antriebsmittel (8) gewährleistet, und parallele Ränder (6b, 6c) aufweist, die je zwei Langlöcher (6s, 6t) enthalten, die gemäß unterschiedlichen Richtungen geneigt sind, damit der Scheitel jedes Langlochs sich in Höhe des unteren Bereichs der Montagestange (6h) befindet.

4. Befestigungsvorrichtung nach Anspruch 1, **dadurch gekennzeichnet, dass** das Antriebsbauteil (8a) zu beiden Seiten eines zentralen Durchgangs (8d) seitliche Aussparungen (8g) aufweist, die in die Führungskehlen (8h) münden, die ein längliches und geneigtes Profil haben.

5. Befestigungsvorrichtung nach Anspruch 1, **dadurch gekennzeichnet, dass** die hakenförmigen Enden (7e, 7f) der Verbindungselemente (7a, 7b) eine ebene Seite (7m, 7n) aufweisen, die einen seitlichen Überstand (7p, 7q) hat.

6. Befestigungsvorrichtung nach Anspruch 1, **dadurch gekennzeichnet, dass** die parallelen Ränder (6b, 6c) des Montagekörpers (6) eine Reihe von Zähnen (6u, 6v) aufweisen, die dazu bestimmt sind, gegen den Boden eines Zubehörteils in Auflage zu kommen.

7. Befestigungsvorrichtung nach Anspruch 1, **dadurch gekennzeichnet, dass** der Montagekörper (6) über jedem parallelen Rand (6b, 6c) Gurtdurchlässe (6w) aufweist, die Verankerungspunkte für Gurte bilden.

8. Befestigungsvorrichtung nach Anspruch 1, **dadurch gekennzeichnet, dass** die Führungskehlen (8h) des Antriebsbauteils (8a) eine Neigung haben, die sich von derjenigen unterscheidet, die für die Langlöcher (6s, 6t) des Montagekörpers (6) vorgesehen ist.
